# EUROPEAN PATENT APPLICATION

(11) **EP 1 302 682 A1**
(43) Date of publication of application: **16.04.2003**
(21) Application number: 02771723.0
(22) Date of filing: 17.05.2002
(51) Int. Cl.: F16C 13/00, B29C 47/88

(54) **HEAT TREATING ROLL**

(30) Priority: 18.05.2001 JP 2001148542
(71) Applicant: Mitsubishi Heavy Industries, Ltd., Tokyo 100-8315 (JP)
(72) Inventor: TSUJI, Hiroshi, Nagoya-shi, Aichi 453-8515 (JP); GOTO, Takuya, Nagoya-shi, Aichi 453-8515 (JP); YOSHIZAWA, Masahiro, Nagoya-shi, Aichi 453-8515 (JP); KOMETANI, Hideo, Nagoya-shi, Aichi 453-8515 (JP); HASHIMOTO, Ritsuo, Hiroshima-shi, Hiroshima 733-8553 (JP); HASEGAWA, Noritaka, Churyo Engineerig Co., Ltd, Nagoya-shi, Aichi 453-0862 (JP)
(74) Representative: HOFFMANN - EITLE
(86) International application number: JP0204810
(87) International publication number: WO02095249

(57) **Abstract**

A heat treatment roll 2 is provided for continuously cooling or heating a treated object such as a resin sheet 5, which is used in an extrusion molded sheet manufacturing apparatus or the like. The heating roll 2 includes a hollow roll body 11 formed with many circular through holes 11a in the roll axis direction at a fixed close pitch on the same radius close to the cylindrical surface, wherein roll body 11 is formed by calculating the space between the circular holes 11a from the cylindrical surface to give the highest heat conduction efficiency with respect to the cylindrical surface and the lowest unevenness of temperature in the circumferential direction; a pair of side plates 12 and 13 which are fixedly provided on both end faces of the roll body 11 so as to be aligned with the roll body 11 and are provided with radial heating medium passages communicating with the circular through holes 11a in the cylindrical surface of the roll body 11; and a pair of rotating support shafts 12a and 13a extending on the same centerline on both sides of the heat treatment roll, each of which is fixedly provided integrally with one of the side plates, and has a heating medium passage communicating with the radial heating medium passages of the side plate in the axis center. Thereby, a cooling medium or a heating medium can be caused to flow from the heating medium passage in one rotating support shaft to the circular through holes in the roll body, and discharged from the heating medium passage in the other rotating support shaft, whereby a treated object such as the resin sheet 5 is cooled or heated.

## Description

### TECHNICAL FIELD

The present invention relates to a construction of a cooling medium or heating medium passage for improving heat transfer efficiency, which is provided in a heat treatment roll for a treated object such as a resin sheet, the heat treatment roll being used for temperature control to perform cooling after molten resin casting in an extrusion molded sheet manufacturing apparatus or to perform heat treatment of a sheet.

### BACKGROUND ART

Generally, in an extrusion molded sheet manufacturing apparatus, after molten resin with a fixed thickness is extruded from a T die of an extruder the molten resin is immediately brought into contact with a cooling roll to be cooled and solidified rapidly into a sheet. Subsequently that sheet is subjected to temperature control by a heat treatment roll, being stretched in the longitudinal and transverse directions to form a required film.

The aforementioned cooling roll must cool a resin sheet of a fixed temperature, which has been extruded from the T die of the extruder, rapidly and uniformly over its entire width. If the cooling temperature of the resin sheet in the widthwise direction is nonuniform, the properties of the resin will vary. If the cooling rate is low, the properties of the sheet will be adversely affected, and also prolonged contact time for cooling makes the diameter of the cooling roll large.

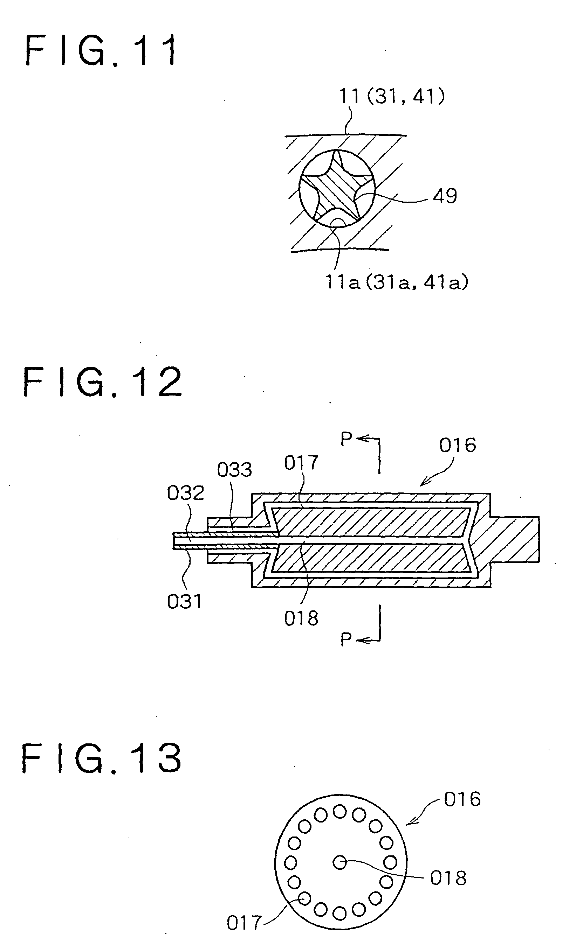

A treatment roll provided with passages 017 and 018 for a heating medium, which are formed by drilling an integral raw material, as shown in FIGS. 12 and 13, can be given as an example of a conventional cooling or heating treatment roll for a extrusion molded sheet manufacturing apparatus. A roll 16 of this example has high flexural rigidity but is very heavy and has high heat capacity. Therefore, it requires a long time for heating at operation start-up, and also requires large bearings, which increase manufacturing costs, making this roll uneconomical. In FIG. 12, reference numeral 031 denotes an inner tube, 032 denotes an introduction hole for fluid, and 033 denotes a discharge hole for fluid.

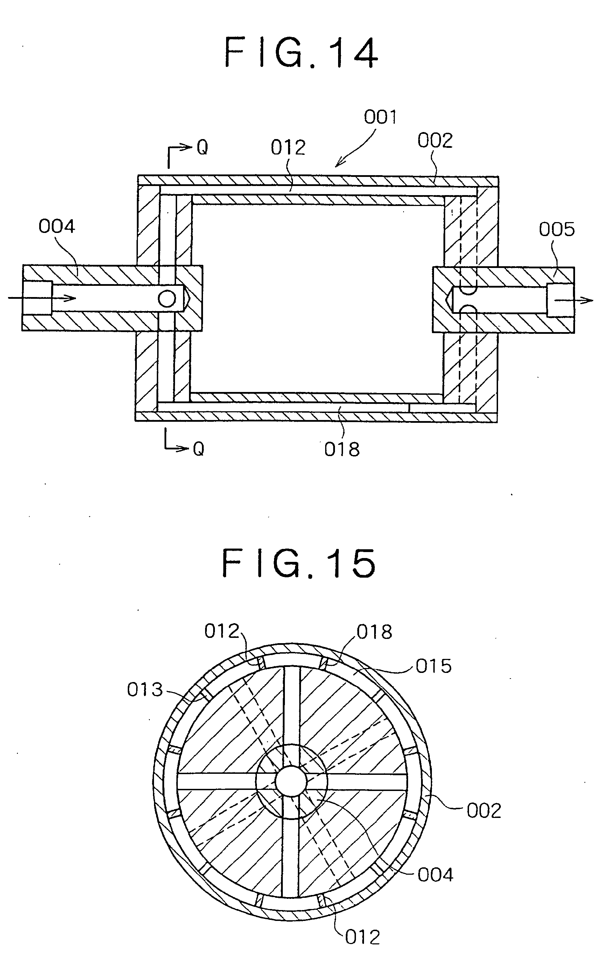

A conventional cooling roll 001 as shown in FIGS. 14 and 15 may also be constructed so that many cooling medium passages 015 of a rectangular shape in cross section surrounded by many partitions 012, 013, which are fabricated of iron sheet and extend in the axial direction, are provided on the inside of a cylindrical roll 002 with a suitable and fixed thickness. A cooling medium introduced through a rotating support shaft 004 of the cooling roll 001 goes through from one side of the passage 015 to the other side thereof to cool the cylindrical surface of the cylindrical roll 002 and also to cool a sheet, and is subsequently discharged through a rotating support shaft 005 on the opposite side. Because it is fabricated of sheet iron, this cooling roll 001 is light in weight and low in heat capacity and does not require much time for heating at operation start-up compared with the above-described integral roll. Also, the bearings are small, making manufacturing costs low, and thus this roll is economical.

In addition to these rolls, Japanese Utility Model Publication No. 63-48807 discloses as a heat treatment roll for temperature control for cooling or heating, a roll constructed so that many jacket chambers extending along the axial direction of a roll body are arranged in the circumferential direction of the roll body, a heating medium of two phases of gas and liquid is filled in the jacket chambers, and a cooling source or a heat source is provided on the inside of the jacket chamber row. This roll has been put on the market. This roll has high properties as a temperature control roll in which the circumferential surface of the roll is kept at a fixed temperature.

In the conventional construction of rolls fabricated of iron sheet, the flow path for the cooling medium has a rectangular shape. The iron sheet member constituting the rectangle does not reinforce the rigidity of roll, meaning in order to keep rigidity the thickness of the roll cannot be decreased. As a result, the heat conduction efficiency is low, and the cooling area is insufficient. In order to increase the cooling area, the diameter of the roll must be increased. Also, the temperature control roll provided with jacket chambers under the surface of the roll body which are filled with a heating medium of gas and liquid, is unsuitable for rapid cooling or heating because the heat conductivity is insufficient.

### DISCLOSURE OF THE INVENTION

An object of the present invention is to provide a heat treatment roll having high rigidity and high heat transfer efficiency.

The present invention solves the above problems using the following means:
(1) A heat treatment roll for continuously cooling or heating a treated object such as a resin sheet, which is used in an extrusion molded sheet manufacturing apparatus, characterized by including:
   a hollow roll body formed with a plurality of circular through holes in the roll axis direction close to a cylindrical surface;
   a pair of side plates which are fixedly provided on both end faces of the roll body and are provided with a plurality of radial heating medium passages communicating with the circular through holes in the roll body; and
   a pair of rotating support shafts extending in the roll shaft direction, each of which is fixed integrally with one of the paired side plates and has a heating medium passage communicating with the radial heating medium passages of the side plate on the inside thereof.
(2) A heat treatment roll for continuously cooling or heating a treated object such as a resin sheet, which is used in an extrusion molded sheet manufacturing apparatus, including:
   a hollow roll body formed with a plurality of circular through holes in the roll axis direction at a fixed close pitch on the same radius close to a cylindrical surface;
   a pair of side plates which are fixedly provided on both end faces of the roll body so as to be aligned with the roll body and are provided with a plurality of radial heating medium passages communicating with the circular through holes in the cylindrical surface of the roll body; and
   a pair of rotating support shafts extending in the roll shaft direction, each of which is fixedly provided integrally with one of the paired side plates and has a heating medium passage communicating with the radial heating medium passages of the side plate in the axis center,
   wherein a cooling medium or a heating medium is caused to flow from the heating medium passage in one rotating support shaft to the circular through holes in the roll body, and is discharged from the heating medium passage in the other rotating support shaft, whereby a treated object such as a resin sheet that is in contact with the cylindrical surface of the roll body is cooled or heated.
(3) The heat treatment roll described in (1) or (2), wherein a double heating medium passage is provided in the center of the rotating support shaft on one side of the roll, and an axial heating medium passage which connects an inside passage of the double heating medium passage in the rotating support shaft to the heating medium passage in the side plate on the other side is provided in the roll body, so that a cooling medium or a heating medium may be supplied from the inside passage of the double passage in the rotating support shaft on one side, and discharged from an outside passage of the double passage (or the supply passage and the discharge passage are reversed).
   In the heat treatment roll of the present invention, since the heating medium passage is formed by the through holes of a circular shape in cross section formed along the circumferential surface of the roll body, the through holes are close to the surface of the roll body. Therefore, even if the space between through holes is made narrow, the rigidity and strength of the roll body can be maintained. Also, since the inner surface of the through hole serves as a heat conduction area, the heat conductivity is high. As a result, the heat conduction efficiency of the roll is high, so that the outer diameter of the heat treatment roll body can be decreased, meaning manufacturing costs can be reduced significantly (claims 1, 2 and 3).
(4) The heat treatment roll described in any one of (1) to (3), wherein the heating medium passage of the side plate at both sides of the roll is provided in double so that a cooling medium or a heating medium flows in the opposite direction alternately in the circular through holes in the roll body, whereby the temperature distribution in the axial direction on the surface of the roll is made uniform.
(5) The heat treatment roll described in (4), including:
   a hollow roll body formed with the circular through holes;
   a side plate A which is fixedly provided on the end face on one side (heating medium supply shaft side) of the roll body so as to be aligned with the roll body and is provided with radial heating medium passages communicating alternately with the circular through holes in a cylindrical surface of the roll body; a ring-shaped intermediate cover A which covers a passage opening portion of the side plate A and is provided with heating medium passages communicating with the circular through holes other than the alternate circular through holes communicating with the side plate A; a side cover A which covers the side face of the intermediate cover A and is fitted with the heating medium passages in the intermediate cover A and a plurality of radial water passage tubes; a rotating support shaft A fixedly provided integrally with the side plate A and having a double heating medium passage in the shaft, which is installed so that an inside heating medium passage communicates with the radial heating medium passages of the side plate A, and an outside heating medium passage communicates with the radial heating medium passages installed to the side cover A;
   a side plate B which is fixedly provided on the end face on the other side (opposite side to the heating medium supply shaft) of the roll body so as to be aligned with the roll body and is provided with radial heating medium passages communicating alternately with the circular through holes in a cylindrical surface of the roll body; a ring-shaped intermediate cover B which covers a passage opening portion of the side plate B and is provided with heating medium passages communicating with the circular through holes other than the alternate circular through holes communicating with the side plate B; a side cover B which covers the side face of the intermediate cover B and is fitted with the heating medium passages in the intermediate cover B and a plurality of radial water passage tubes; a rotating support shaft B fixedly provided integrally with the side plate B and having a double heating medium passage one side of which is closed in the shaft, which is installed so that an outside heating medium passage communicates with the radial heating medium passages of the side plate B, and an inside heating medium passage communicates with the radial heating medium passages installed to the side cover B; and
   a double water passage tube connecting the double heating medium passages of the rotating support shaft A and the rotating support shaft B to each other, wherein
   when a cooling medium or a heating medium is supplied from an inside passage of the double passage in the rotating support shaft A and is discharged from an outside passage of the double passage (or the supply passage and the discharge passage are reversed), the cooling or heating medium flows in opposite directions in alternate circular through holes in the cylindrical surface of the roll body, whereby the temperature distribution in the axial direction on the surface of the roll is made uniform.
(6) The heat treatment roll described in (4) or (5), wherein a notch passage directed toward the center of the roll body is provided in alternate through holes of both end portions of the roll body, and by this notch passage the circular through holes communicate alternately with the heating medium passages of the side plate A and the side plate B.
   For the heat treatment roll described in (4) to (6) where the heating medium flows in opposite directions in alternate heating medium passages in the roll body, even if there is a difference in temperature between the inlet and outlet of the heating medium passage, the temperature distribution in the axial direction on the surface of the roll body can be made uniform. Therefore, the flow rate of cooling water need not be increased excessively, so that the capacity of pump for heating medium can be decreased, and temperature control equipment etc. can be made small in size.
(7) The heat treatment roll described in (4) or (5), wherein a notch passage directed toward the center of the roll body is not provided alternately in the through holes unlike the heat treatment roll described as in (6), but a bottomed counter-sunk elongated hole (oval-shaped hole) which extends toward the inside from the inner periphery of the roll body to serve as a heating medium passage is formed at a position at which the circular through hole in the roll body comes alternately into contact with the ring-shaped intermediate cover A and the intermediate cover B that cover the passage opening portions of the side plate A and the side plate B, and a through hole (heating medium passage) communicating with the circular through hole is formed at a position of the alternate circular through hole other than the counter-sunk elongated hole.
   For the double heating medium passage construction provided in the side plate as described in claim 7, a construction where the bottomed counter-sunk elongated hole extending toward the inner periphery side and the through hole are alternately provided in the intermediate cover a simpler shape compared with the double heating medium passage construction of the roll described in claims 4 to 6, which reduces fabrication costs.
(8) The heat treatment roll described in any one of (1) to (7), wherein a longitudinal member of a star shape, triangular shape, or other polygonal shapes in cross section is inserted in each of the circular through holes provided close to the cylindrical surface of the roll body so that the flow rate of cooling medium or heating medium is reduced with respect to the heat conduction area.
(9) The heat treatment roll described in item (8), wherein the longitudinal member having a polygonal cross section is formed of a heat-resisting extrusion molded resin having resistance to heating medium.

For the construction in which the volume-reducing longitudinal member is inserted in the heating medium passage in the roll body as described in claims 8 and 9, since the cooling water passage area is 1/2 or less than the cooling water passage area when the longitudinal member is not inserted, the cooling water flow rate is half or less with respect to the same cooling area, thus significantly increasing the cooling efficiency. Therefore, the size of the roll body can be made small, and hence the capacity and size of heating medium supply equipment, such as a pump, can be decreased, by which manufacturing costs are reduced.

As described above, the construction of this heat treatment roll is particularly effective when it applied in a cooling roll requiring high cooling capacity used for casting in a resin sheet manufacturing apparatus.

### BRIEF DESCRIPTION OF THE DRAWINGS

FIG. 1 is a schematic layout view showing a cooling roll and its surroundings of an extrusion molding casting machine;
FIG. 2 is a sectional view showing a cooling roll in accordance with a first embodiment of the present invention;
FIG. 3 is a sectional view taken along the line A-A in the direction of the arrow B of the cooling roll shown in FIG. 2;
FIG. 4 is an enlarged view of portion C in FIG. 3;
FIG. 5 is a sectional view showing a construction of a cooling roll in accordance with a second embodiment of the present invention;
FIG. 6 is a view taken in the direction of the arrow D, a sectional view taken along the arrow F, and a sectional view taken along the arrow G of the cooling roll shown in FIG. 5;
FIG. 7 is a sectional view taken along the line E-E of the cooling roll shown in FIG. 5;
FIG. 8 is a partial sectional view showing another construction of a passage for cooling water of the cooling roll shown in FIG. 5;
FIG. 9 is a sectional view taken along the line H-H of FIG. 8, being a partial view showing the shape of a passage for cooling water;
FIG. 10 is a partial sectional view showing a construction in which the cooling water passage area of roll cylinder shown in FIGS. 2 and 5 is reduced;
FIG. 11 is a partial sectional view showing another construction in which the cooling water passage area of roll cylinder shown in FIGS. 2 and 5 is reduced;
FIG. 12 is a sectional view showing a conventional heat treatment roll;
FIG. 13 is a sectional view taken along the line P-P of FIG. 12;
FIG. 14 is a sectional view showing another example of a conventional heat treatment roll; and
FIG. 15 is a sectional view taken along the line Q-Q of FIG. 14.

### BEST MODE FOR CARRYING OUT THE INVENTION

For embodiments of the present invention, a cooling roll requiring high cooling capacity which is used in an extrusion molded sheet manufacturing apparatus will be described as an example.

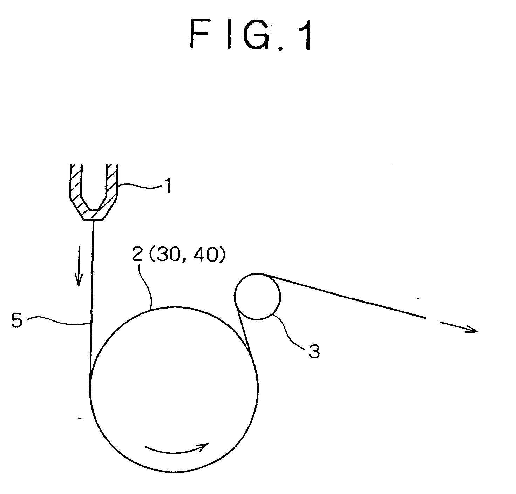

First, the outline of a process from molten resin sheet extrusion to solidification and takeover in the extrusion molded sheet manufacturing apparatus will be described with reference to the accompanying drawings. FIG. 1 is a schematic layout view showing a cooling roll and its surroundings of an extrusion molding casting machine. As shown in FIG. 1, in the extrusion molded sheet manufacturing apparatus, after a molten resin sheet 5 with a fixed thickness is extruded downward from a T die of an extruder, the sheet 5 is immediately brought into contact with a cooling roll 2 (30, 40) to be cooled and solidified rapidly. Subsequently, the sheet 5 passes through a takeover roll 3 and is subjected to subsequent sheet treatment (temperature control, fabrication into a required film by being stretched in the longitudinal and transverse directions), not shown.

### (First embodiment)

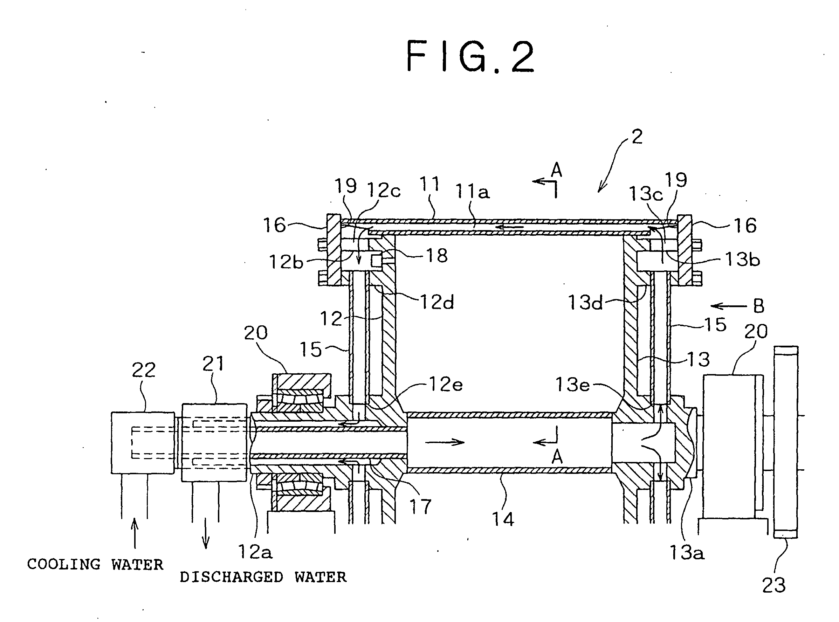

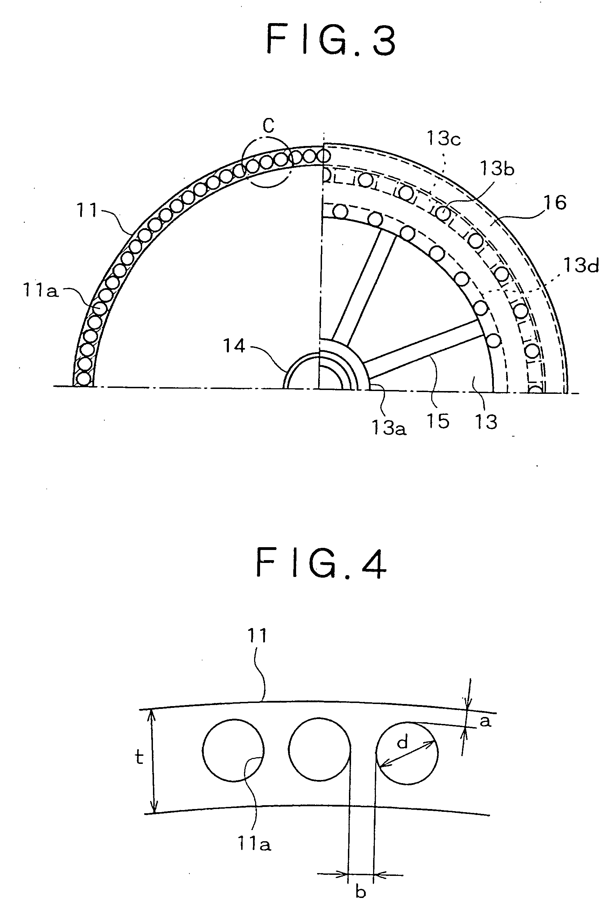

A cooling roll in accordance with a first embodiment of the present invention will be described with reference to the accompanying drawings. FIG. 2 is a side sectional view of the cooling roll, FIG. 3 is a sectional view taken along the line A-A the direction of the arrow B of the cooling roll shown in FIG. 2, and FIG. 4 is an enlarged view of portion C in FIG. 3.

The construction of the cooling roll 2 will be described. The cooling roll 2 shown in the figures has a roll body 11. This roll body 11 is formed into a hollow cylindrical shape by bending a plate material such as a carbon steel and joining it by welding and further grinding the inner and outer surfaces to keep a predetermined roundness and plate thickness accuracy. The roll body is also formed with many circular through holes extending in the roll axis direction at a fixed pitch on the same radius close to the cylindrical surface to provide cooling water passages 11a. Moreover, for the roll body 11, as shown in FIG. 4, an inside diameter d of the cooling water passage 11a, a distance a from the cylindrical surface, and a space b between the cooling water passages 11a are calculated so that when a cooling or heating medium is caused to pass through a plurality of water passages 11a formed as described above, the heat conduction efficiency with respect to the cylindrical surface is highest, and unevenness of temperature in the circumferential direction is least.

In order to increase the cooling capacity, the flow rate of cooling water passing through the cooling water passage 11a must be increased. Therefore, at both ends of the roll body 11, the inside diameter is increased by a required dimension so that a part of the cooling water passage 11a is exposed.

A side plate 12 is a welded structure integral with a water introduction shaft portion 12a that is one rotating support shaft of the cooling roll 2, and a side plate 13 is a welded structure integral with a side plate shaft portion 13a that is the other rotating support shaft of the cooling roll 2. The side plate 12 and the side plate 13 are aligned with the roll body 11 and are fixed by welding to each side of the roll body 11 in a liquid-tight manner. The cooling roll 2 is configured so as to be rotatably supported by bearings 20, 20 provided in the water introduction shaft portion 12a and the side plate shaft portion 13a, and thereby be rotationally driven by a power unit, not shown, via a gear 23 fixedly provided in the side plate shaft portion 13a.

Reference characters 12b and 13b denote annular protrusions fixed by welding to the side plates 12 and 13, respectively. The protrusions 12b, 13b are provided with a notch 12c, 13c serving as a cooling water passage at suitable intervals. Also, reference characters 12d and 13d denote annular protrusions fixed by welding to the side plates 12 and 13, respectively. The height of the protrusions 12b, 13b, 12d, 13d is set so as to be flush with the end face of the roll body 11. The protrusions 12d, 13d are formed with a plurality of through holes at equal angular intervals toward the shaft center. A plurality of water passage tubes 15 are fixed by welding in a liquid-tight manner to through holes 12e, 13e formed in the water introduction shaft portion 12a and the side plate shaft portion 13a on the same line as the through hole formed in the protrusion 12d, 13d. Reference numeral 18 denotes a drainage plug for draining cooling water leaking into the cooling roll 2.

The end portion of the roll body 11 and the protrusions 12b, 13b, 12d, 13d are covered with a side cover 16 with a packing 19 held therebetween, and are fixed in a liquid-tight manner with many bolts. The end portions of the roll body 11 and the protrusions 12b, 13b, 12d, 13d form a passage for cooling water.

Between the water introduction shaft portion 12a and the side plate shaft portion 13a, a water passage tube 14 is fixed by welding in a liquid-tight manner.

Also, a water introduction tube 17 is inserted in the water introduction shaft portion 12a to form a double water passage.

Cooling water that has been subjected to temperature control is supplied to the water introduction tube 17 through a rotary joint 22, passing through the water passage tube 14, a water passage in the side plate shaft portion 13a, and the water passage tube 15, and flows from the water passage of the side plate 13 to the cooling water passage in the roll body 11 to cool the resin sheet 5 that is in contact with the cylindrical surface of the roll body 11. Water that has been heated by the heat taken away from the resin sheet 5 passes through the water passage of the side plate 12, the water passage tube 15, and an outside water passage of the double tube portion of the water introduction shaft portion 12a, and is discharged from a rotary joint 21.

In this construction, the supply passage and the discharge passage may be reversed, that is, cooling water may be supplied from the outside water passage of the double tube portion of the water introduction shaft portion 12a, and the heated water may be discharged from the water introduction tube 17.

The configuration of this cooling roll 2 can also be used as a heating roll by circulating a heating medium in place of cooling water.

### (Second embodiment)

A second embodiment of the present invention is configured so that the cooling water passage of the side plate on each side of the roll of the first embodiment is provided in double so that cooling water flows in the opposite direction in alternate passages of a plurality of cooling water passages in the roll body, by which the temperature distribution in the axial direction on the surface of roll is made uniform.

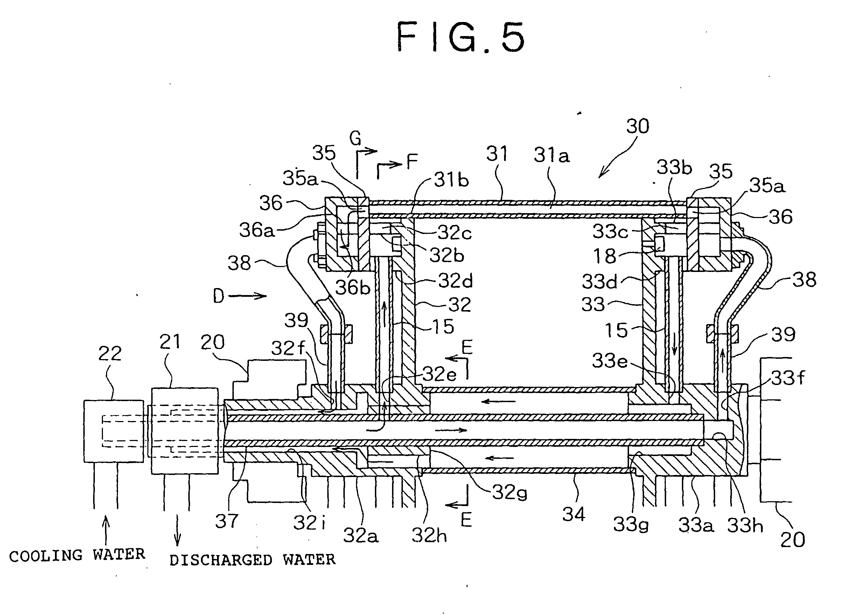

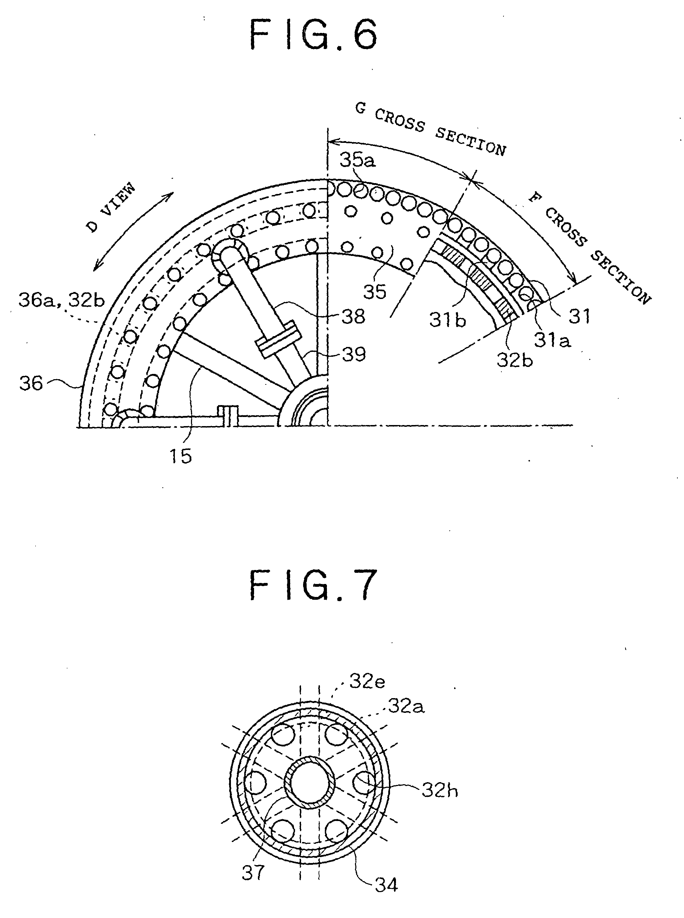

A cooling roll in accordance with the second embodiment of the present invention will be described with reference to the accompanying drawings. FIG. 5 is a sectional view showing a construction of the cooling roll, FIG. 6 is a view taken in the direction of the arrow D, a sectional view taken along the arrow F, and a sectional view taken along the arrow G of the cooling roll shown in FIG. 5, and FIG. 7 is a sectional view taken along the line E-E of the cooling roll shown in FIG. 5.

The construction of a cooling roll 30 will be described. The cooling roll 30 shown in FIG. 5 has a roll body 31. This roll body 31 is a roll having approximately the same construction as that of the roll body 11 of the first embodiment. Specifically, the inside diameter of a cooling water passage 31a provided by forming a circular through hole, the distance from the cylindrical surface of the roll body 31, and the space between the cooling water passages 31 are calculated in completely the same way as the first embodiment shown in FIG. 4.

As shown in the F sectional view of FIG. 6, the cooling water passage 31a at both ends of the roll body 31 is provided with a notch 31b of a required length in the inside radial direction so that alternate passages communicate with the water passages on the side plate side.

A side plate 32 is a welded structure integral with a water introduction shaft portion 32a that is one rotating support shaft of the cooling roll 30, and a side plate 33 is a welded structure integral with a side plate shaft portion 33a that is the other rotating support shaft of the cooling roll 30. The side plate 32 and the side plate 33 are aligned with the roll body 31 and are fixed by welding to each side of the roll body 31 in a liquid-tight manner. The cooling roll 30 is configured so as to be rotatably supported by bearings 20, 20 provided in the water introduction shaft portion 32a and the side plate shaft portion 33a, and thereby be rotationally driven by a power unit, not shown.

Reference characters 32b and 33b denote annular protrusions fixed by welding to the side plates 32 and 33, respectively. The protrusions 32b, 33b are provided with a notch 32c, 33c serving as a cooling water passage at suitable intervals. Also, reference characters 32d and 33d denote annular protrusions fixed by welding to the side plates 32 and 33, respectively. The height of the protrusions 32b, 33b, 32d, 33d is set so as to be flush with the end face of the roll body 31. The protrusions 32d, 33d are formed with a plurality of through holes at equal angular intervals toward the shaft center. A plurality of water passage tubes 15 are fixed by welding in a liquid-tight manner to through holes 32e, 33e formed in the water introduction shaft portion 32a and the side plate shaft portion 33a on the same line as a through hole formed in the protrusion 32d, 33d. Reference numeral 18 denotes a drainage plug for draining cooling water leaking into the cooling roll 30. The through hole 32e communicates with a water introduction tube 37. Also, the through hole 33e communicates with a water passage 33g in the side plate shaft portion 33a.

Reference numeral 35 denotes an intermediate cover that covers a passage opening of the side plate 32. The intermediate cover 35 is formed with through holes 35a communicating with the cooling water passage holes 31a, except for the cooling water passages 31a provided with the alternate notch 31b which communicate with the water passages of the side plate 32. Reference numeral 36 denotes a side cover that covers the side face of the intermediate cover 35. The side cover 36 has an annular protrusion 36a similar to the protrusions 32b and 33b, and a notch 36b serving as a cooling water passage is provided. In the opening portions of the side cover 36, a plurality of bent tubes 38 serving as a cooling water passage are installed. The bent tube 38 is connected with a straight tube 39, and the straight tube 39 is fixed by welding to the opening portion of a through hole 32f in the water introduction shaft portion 32a. The through hole 32f is open to a water passage 32i in the water introduction shaft portion 32a.

Parts installed to the side plate 33 are the same as those installed to the side plate 32. The intermediate cover 35 and the side cover 36 are installed, the bent tubes 38 and the straight tubes 39 are connected, and the straight tube 39 is fixed by welding to the opening portion of a through hole 33f formed in the side plate shaft portion 33a. The through hole 33f communicates with an inside water passage 33h.

Reference numeral 34 denotes a water passage tube forming an outside water passage of water passage tube between the water introduction shaft portion 32a and the side plate shaft portion 33a.

The water introduction tube 37 engages with an engagement portion 32g of the water introduction shaft portion 32a, and is connected to the inside water passage 33h of the side plate shaft portion 33a so as to constitute the inside of the double water passage between the water introduction shaft portion 32a and the side plate shaft portion 33a, and a rotary joint 22 is connected to the opening portion of the water introduction tube 37.

As shown in FIGS. 5 and 7, the water introduction shaft portion 32a is formed with a plurality of through holes 32h leading from an outside water passage between the water passage tube 34 and the water introduction tube 37 to an outside water passage of the water introduction shaft portion 32a.

Cooling water that has been subjected to temperature control is supplied from the rotary joint 22 to the water introduction tube 37 forming the inside water passage of the water introduction shaft portion 32a. Some (half the amount) of the cooling water goes up through the through hole 32e, passes through the water passage tube 15 and the water passage in the side plate 32, and flows into the cooling water passage 31a in the roll body 31 to cool the surface of the roll body 31 and to thereby cool a resin sheet. Then, the cooling water flows into the outside water passage 33g in the side plate shaft portion 33a through the water passage in the side plate 33, the water passage tube 15, and the through hole 33e, and further passes through the outside water passage of the water passage pipe 34, the through hole 32h, and the outside water passage 32i in the water introduction shaft portion 32a, and is being discharged from a rotary joint 21.

On the other hand, the remaining half amount of cooling water supplied to the water introduction tube 37 passes through the water passage 33h at the farthest end of the water introduction tube 37, the through hole 33f, the straight tube 39, the bent tube 38, the water passage surrounded by the side cover 36 and the intermediate cover 35, and the through hole 35a in the intermediate cover 35, and flows in the cooling water passage 31a in the roll body 31 (in a direction reverse to the direction of the above-described cooling water) to cool the surface of the roll body 31 and to thereby cool the resin sheet. Then, the cooling water passes through the through hole 35a in the intermediate cover 35 on the side plate 32 side, the water passage surrounded by the side cover 36 and the intermediate cover 35, the bent tube 38, the straight tube 39, and the through hole 32f, and flows into the outside water passage 32i in the water introduction shaft portion 32a to join with the above-described discharged cooling water, and is discharged from the rotary joint 21 together with the above-described cooling water.

In the construction of the second embodiment as well, the supply passage and the discharge passage may be reversed, that is, cooling water may be supplied from the outside water passage of the double tube portion of the water introduction shaft portion 32a, and the heated water may be discharged from the water introduction tube 37.

As described above, the inside notch 31b leading to the water passage in the side plates 32, 33 provided at both ends of the cooling water passage 32a in the roll body 31 is provided alternately. Therefore, cooling water flows in the opposite direction alternately in the cooling water passages 31a in the roll body 31, so that even if there is a difference in temperature between the inlet and outlet of the cooling water passage 31a, the temperature distribution in the axial direction on the surface of the roll body 31 can be made uniform. Therefore, the flow rate of cooling water need not be increased excessively, so that the pump capacity for the cooling water can be decreased, and temperature control equipment etc. can be made small in size.

The configuration of this cooling roll 30 can also be used as a heating roll by circulating a heating medium in place of cooling water.

### (Third embodiment)

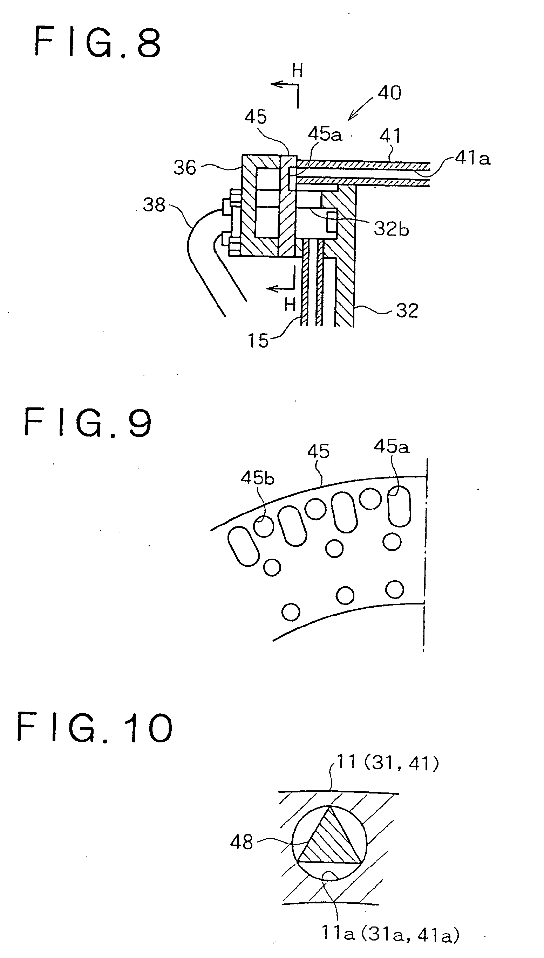

FIG. 8 is a partial sectional view showing another construction of a passage for cooling water of the cooling roll shown in FIG. 5, and FIG. 9 is a sectional view taken along the line H-H of FIG. 8, being a partial view showing the shape of a passage for cooling water.

In a third embodiment of the present invention, unlike the above-described second embodiment, an inside notch 31b is not provided at both ends of the cooling water passage 31a in the roll body 31. As shown in FIG. 9, a bottomed counter-sunk elongated hole (oval-shaped hole) 45a extending toward the inner periphery side is formed at the position where a cooling water passage 41a (31a in the second embodiment) in a roll body 41 (31 in the second embodiment) comes alternately into contact with a pair of ring-shaped intermediate covers 45 (the outside shape of ring is almost the same as that of the intermediate cover 35) that cover the water passage opening portions of side plates 32 and 33. At the position of the alternate cooling water passage 41a other than the counter-sunk elongated hole 45a, a through hole 45b communicating with the cooling water passage 41a is formed. Other constructions and operation are completely the same as those of the second embodiment, so explanation is omitted to avoid duplication. In this construction, the fabricated portion of the large-sized roll body 41 is reduced, and the lighter intermediate cover 45 is counter sunk, by which handling at the time of part fabrication is made easy, and fabrication costs are reduced.

### (Fourth embodiment)

In a fourth embodiment of the present invention, a volume-reducing longitudinal member is inserted in the cooling water passage 11a, 31a, 41a in the roll body of the above-described embodiments. The fourth embodiment will be described with reference to the accompanying drawings.

FIG. 10 is a partial sectional view showing a construction in which the cooling water passage area of the cooling roll shown in FIGS. 2, 5 and 8 is reduced, and FIG. 11 is a partial sectional view in which the cooling water passage area of the cooling roll is reduced similarly.

Since the construction and operation of this embodiment is completely the same as those of the first to third embodiments, only the portion around the cooling water passage in the roll body will be explained.

The reference numerals for the explanation use the reference numerals from the first embodiment.

FIG. 10 shows a cross section where a longitudinal member 48 of a triangular shape in cross section which has a length approximately equal to the length of a cooling water passage 11a is inserted into the cooling water passage 11a in a roll body 11. Since the cross-sectional area of the longitudinal member 48 is about 1/2 of the cross-sectional area of the cooling water passage 11a, the cooling water passage area when the longitudinal member 48 is inserted is about 1/2 of the cooling water passage area when the longitudinal member 48 is not inserted. That is to say, only a half of cooling water flow rate is needed with respect to the same cooling area, so that cooling efficiency is increased significantly. FIG. 11 shows a cross section where a longitudinal member 49 of a star shape in cross section which has a length approximately equal to the length of the cooling water passage 11a is inserted in the cooling water passage 11a in the roll body 11. In this case, since the cross-sectional area of the longitudinal member 49 is larger than 1/2 of the cross-sectional area of the cooling water passage 11a, the cooling water passage area when the longitudinal member 49 is inserted is smaller than 1/2 of the cooling water passage area when the longitudinal member 49 is not inserted. Therefore, cooling efficiency is increased significantly.

The cross-sectional shape of the longitudinal member is not limited to triangular shape and star shape. By inserting the longitudinal member having a star-shaped cross section, while making sure that the flow resistance of cooling water does not increase remarkably, the cooling water passage area can be reduced, leading to improved cooling efficiency. Therefore, the size of the roll body can be decreased.

The use of a water-proof extrusion molded resin material is convenient as a material of the above-described volume-reducing longitudinal member. Also, this cooling roll can be used as a heating roll, and in this case, a heat-resisting extrusion molded resin material having resistance to the heating medium is used as a material of the volume-reducing longitudinal member.

### INDUSTRIAL APPLICABILITY

As described above in detail, the present invention provides a heat treatment roll that has high rigidity and high heat transfer efficiency.

## Claims

1. A heat treatment roll for continuously cooling or heating a treated object such as a resin sheet, which is used in an extrusion molded sheet manufacturing apparatus, **characterized by** comprising:
a hollow roll body formed with a plurality of circular through holes in the roll axis direction close to a cylindrical surface;
a pair of side plates which are fixedly provided on both end faces of said roll body and are provided with a plurality of radial heating medium passages communicating with circular through holes in said roll body; and
a pair of rotating support shafts extending in the roll shaft direction, each of which is fixed integrally with one of the paired side plates and has a heating medium passage communicating with the radial heating medium passages of said side plate on the inside thereof.

2. A heat treatment roll for continuously cooling or heating a treated object such as a resin sheet used in an extrusion molded sheet manufacturing apparatus, comprising:
a hollow roll body formed with a plurality of circular through holes in the roll axis direction at a fixed close pitch on the same radius close to a cylindrical surface;
a pair of side plates which are fixedly provided on both end faces of said roll body so as to be aligned with said roll body and are provided with a plurality of radial heating medium passages communicating with the circular through holes in the cylindrical surface of said roll body; and
a pair of rotating support shafts extending in the roll shaft direction, each of which is fixedly provided integrally with one of the paired side plates and has a heating medium passage communicating with the radial heating medium passages of said side plate in the axis center,
and **characterized in that** a cooling medium or a heating medium is caused to flow from the heating medium passage in one rotating support shaft to the circular through holes in said roll body, and is discharged from the heating medium passage in the other rotating support shaft, whereby a treated object such as a resin sheet that is in contact with the cylindrical surface of said roll body is cooled or heated.

3. The heat treatment roll according to claim 1 or 2, **characterized in that** a double heating medium passage is provided in the center of the rotating support shaft on one side of the roll, and an axial heating medium passage which connects an inside passage of the double heating medium passage in said rotating support shaft to the heating medium passage in the side plate on the other side is provided in the roll body, so that a cooling medium or a heating medium may be supplied from the inside passage of the double passage in the rotating support shaft on one side, and discharged from an outside passage of the double passage (or the supply passage and the discharge passage are reversed).

4. The heat treatment roll according to any one of claims 1 to 3, **characterized in that** the heating medium passage of the side plate at both sides of said roll is provided in double so that a cooling medium or a heating medium flows in the opposite direction alternately in the circular through holes in said roll body, whereby the temperature distribution in the axial direction on the surface of said roll is made uniform.

5. The heat treatment roll according to claim 4, comprising:
a hollow roll body formed with said circular through holes;
a side plate A which is fixedly provided on the end face on one side (heating medium supply shaft side) of said roll body so as to be aligned with said roll body and is provided with radial heating medium passages communicating alternately with the circular through holes in a cylindrical surface of said roll body; a ring-shaped intermediate cover A which covers a passage opening portion of said side plate A and is provided with heating medium passages communicating with the circular through holes other than the alternate circular through holes communicating with said side plate A; a side cover A which covers the side face of said intermediate cover A and is fitted with the heating medium passages in said intermediate cover A and a plurality of radial water passage tubes; a rotating support shaft A fixedly provided integrally with said side plate A and having a double heating medium passage in the shaft, which is installed so that an inside heating medium passage communicates with the radial heating medium passages of said side plate A, and an outside heating medium passage communicates with the radial heating medium passages installed to said side cover A;
a side plate B which is fixedly provided on the end face on the other side (opposite side to the heating medium supply shaft) of said roll body so as to be aligned with said roll body and is provided with radial heating medium passages communicating alternately with the circular through holes in a cylindrical surface of said roll body; a ring-shaped intermediate cover B which covers a passage opening portion of said side plate B and is provided with heating medium passages communicating with the circular through holes other than the alternate circular through holes communicating with said side plate B; a side cover B which covers the side face of said intermediate cover B and is fitted with the heating medium passages in said intermediate cover B and a plurality of radial water passage tubes; a rotating support shaft B fixedly provided integrally with said side plate B and having a double heating medium passage one side of which is closed in the shaft, which is installed so that an outside heating medium passage communicates with the radial heating medium passages of said side plate B, and an inside heating medium passage communicates with the radial heating medium passages installed to said side cover B; and
a double water passage tube connecting the double heating medium passages of said rotating support shaft A and said rotating support shaft B to each other, and
**characterized in that**
when a cooling medium or a heating medium is supplied from an inside passage of the double passage in said rotating support shaft A and is discharged from an outside passage of the double passage (or the supply passage and the discharge passage are reversed), the cooling medium or the heating medium flows in opposite directions in alternate the circular through holes in the cylindrical surface of said roll body, whereby the temperature distribution in the axial direction on the surface of the roll is made uniform.

6. The heat treatment roll according to claim 4 or 5, **characterized in that** a notch passage directed toward the center of said roll body is provided alternately in the through holes in both end portions of said roll body, and by this notch passage the circular through holes communicate alternately with the heating medium passages of said side plate A and said side plate B.

7. The heat treatment roll according to claim 4 or 5, **characterized in that** a notch passage directed toward the center of said roll body is not provided alternately in the through holes unlike the heat treatment roll described as in claim 6, but a bottomed counter-sunk elongated hole (oval-shaped hole) which extends toward the inside from the inner periphery of said roll body to serve as a heating medium passage is formed at a position at which the circular through hole in said roll body comes alternately into contact with said, ring-shaped intermediate cover A and said intermediate cover B that cover the passage opening portions of the side plate A and said side plate B, and a through hole (heating medium passage) communicating with the circular through hole is formed at a position of the alternate circular through holes other than the counter-sunk elongated hole.

8. The heat treatment roll according to any one of claims 1 to 7, **characterized in that** a longitudinal member of a star shape, triangular shape, or other polygonal shapes in cross section is inserted in each of the circular through holes provided close to the cylindrical surface of said roll body so that the flow rate of cooling medium or heating medium is reduced with respect to the heat conduction area.

9. The heat treatment roll according to claim 8, **characterized in that** said longitudinal member having a polygonal cross section is formed of a heat-resisting extrusion molded resin having resistance to heating medium.
